# EUROPÄISCHE PATENTANMELDUNG

(11) **EP 1 557 253 A1**
(43) Veröffentlichungstag der Anmeldung: **27.07.2005**
(21) Anmeldenummer: 04029426.6
(22) Anmeldetag: 13.12.2004
(51) Int. Cl.: B29C 45/16, B65D 1/22, B65D 25/30

(54) **Verfahren zur Herstellung eines Transportkastens aus Kunststoff und für dessen Herstellung geeignete Spritzgussform**

(30) Priorität: 20.01.2004 DE 102004003036
(71) Anmelder: LINPAC Materials Handling Germany GmbH, 32107 Bad Salzuflen (DE)
(72) Erfinder: Die Erfindernennung liegt noch nicht vor
(74) Vertreter: Junius, Walther, Dr.

(57) **Zusammenfassung**

Die Erfindung betrifft ein Verfahren zur Herstellung eines Transportkastens aus Kunststoff mit gepolstertem Handgriff (6), bei dem der Transportkasten aus einem harten stabilen Kunststoff und der Handgriff aus einem weichen Kunststoff hergestellt ist, und eine für dessen Herstellung geeignete Spritzgußform. Es ist die Aufgabe der Erfindung, einen mit Handgriffpolstern (6) ausgestatteten Flaschenkasten auf einer einzigen Spritzgußmaschine in einem einzigen Arbeitsgang herzustellen, bei dem die Handgriffpolster aus beliebig weichem Material gefertigt werden können und auf diese Weise die Produktion zu vereinfachen, effektiver zu machen und zu verbilligen. Die Erfindung besteht darin, daß man eine Spritzgußform verwendet, die in ihrer die Seitenwand (2) mit dem gepolsterten Handgiffloch (3) formenden Außenwand zwei gegeneinander austauschbar verschiebbare Formteile (8,9) enthält, ein Formteil (8), das beim Spritzen des Kastens die Form für den Wandteil zur Aufnahme des Handgiffpolsters (6) bildet und einen zweiten Formteil (9), der das Handgriffpolster (6) formt, daß man in diese Spritzgußform zuerst den harten, den Kasten bildenden Kunststoff einspritzt, diesen bis zu seiner Standfestigkeit (Formstabilität) erkalten läßt, dann den das Handgriffloch (3) bildenden Formteil (8) gegen den das Polster (6) im Handgriffloch (3) bildenden Formteil (9) tauscht, und danach den den Handgriff (6) bildenden Kunststoff über einen zweiten gesonderten Zuführungskanal (7) in die Form einspritzt. Auf diese Weise gelingt es, den Transportkasten mit gepolsterten Handgrifflöchern (6) in ein und derselben Form ohne Umsetzung des Spritzlings in drei Arbeitsstufen zu fertigen, einer ersten, in der unter hohem Druck ein harter Kunststoff in die Form eingepreßt wird, einer zweiten, in der ein Teil der Wandung der Form ausgetauscht wird, und einer dritten, in der unter vermindertem Druck die zweite den Handgriff bildende Kunststoffkomponente in die Form auf einem zweiten Weg eingepreßt wird.

## Beschreibung

Die Erfindung betrifft ein Verfahren zur Herstellung eines Transportkastens aus Kunststoff mit gepolstertem Handgriff, bei dem derTransportkasten aus einem harten stabilen Kunststoff und der Handgriff aus einem weichen Kunststoff hergestellt ist, und eine für dessen Herstellung geeignete Spritzgußform.

Gepolsterte Handgriffe an Transportkästen sind bekannt. Sie erleichtern das Tragen von Transportkästen, insbesondere über längere Strecken, sie sind hautfreundlich und handschonend. Bei Flaschenkästen lassen sie das Tragen in den Garten bei einer Gartenparty oder bei einer Herrenpartie in die freie Natur nicht so schwer erscheinen.

Derartige Transportkästen aus Kunststoff werden bisher auf zweierlei Art hergestellt:

Eine Herstellungsart besteht darin, daß man in einem gesonderten Spritzgußvorgang das Polsterteil bzw. die Polsterung herstellt und diese dann in die Spritzgußform des Transportkastens einlegt, wonach man den Spritzgußvorgang mit dem härteren Kunststoffmaterial für die Herstellung der Wände und des Bodens in die Form einpreßt. Diese Art der Herstellung hat sich in der Praxis für die gewünschten weichen, handschonenden Polstermaterialien wenig bewährt. Weiche Polster werden beim Spritzgußverfahren unter den dort zwangsläufig angewandten hohen Drucken derart komprimiert, daß sie ihre Form einbüßen. Man mußte bei diesem Verfahren auf so harte Polster ausweichen, die sich zwar optisch durch eine andere Farbe von dem für die Wände und den Boden des Transportkasten verwendeten Material unterscheiden, nicht aber in ihrer Shore-Härte. Außerdem haftet dieser Herstellungsart der Nachteil an, umständlich, uneffektiv und teuer zu sein. Denn es sind zwei Spritzgußvorgänge, einer für die Herstellung der Polster, ein zweiter für die Herstellung des Kastens, auf verschiedenen Spritzgußmaschinen notwendig, es sind außerdem zusätzliche Roboterarbeiten für das Einsetzen der vorgefertigten Polster in die Spritzgußform von nöten.

Die andere Herstellungsart benötigt ebenfalls zwei Spritzgußvorgänge auf zwei unterschiedlichen Spritzgußmaschinen und besteht darin, daß zunächst der Transportkasten auf einer Spritzgußmaschine für sich hergestellt wird, der so für sich hergestellte Spritzling dann auf eine zweite Spritzgußmaschine umgesetzt wird und dann auf dieser zweiten Spritzgußmaschine die Handgriffpolster an den Spritzling angespritzt werden. Auch diese Herstellungsart ist teuer und wenig effektiv. Denn sie erfordert nicht nur zwei Spritzgußmaschinen, sondern auch zwei Spritzgußformen in Kastendimensionen, die zumindest im Kastenoberteil, wo die Handgrifflöcher sitzen, völlig identisch ausgeführt sind. Außerdem erfordert diese Herstellungsart einen Roboter für die Umsetzung des in der ersten Spritzgußmaschine hergestellten Transportkastens in die zweite Spritzgußmaschine. Auch dieser Herstellungsart haftet der Nachteil an, umständlich, uneffektiv und teuer zu sein.

Die Erfindung vermeidet die Nachteile des Standes der Technik. Es ist die Aufgabe der Erfindung, einen mit Handgriffpolstern ausgestatteten Flaschenkasten auf einer einzigen Spritzgußmaschine in einem einzigen Arbeitsgang ohne Unterbrechung durch eine Vorproduktion der Polster ober Umsetzen auf eine andere Maschine herzustellen, bei dem die Handgriffpolster aus beliebig weichem Material gefertigt werden können und auf diese Weise die Produktion zu vereinfachen, effektiver zu machen und zu verbilligen.

Die Erfindung besteht darin, daß man eine Spritzgußform verwendet, die in ihrer die Seitenwand mit dem gepolsterten Handgiffloch formenden Außenwand zwei gegeneinander austauschbar verschiebbare Formteile enthält, ein Formteil, das beim Spritzen des eigentlichen Kastens die Handgrifflöcher zur Aufnahme der Handgiffpolster bildet und einen zweiten Formteil, der das Handgriffpolster formt, daß man in diese Spritzgußform zuerst den harten, den Kasten bildenden Kunststoff einspritzt, diesen bis zu seiner Standfestigkeit (Formstabilität) erkalten läßt, dann den das Handgriffloch bildenden Formteil gegen den das Polster im Handgriffloch bildenden Formteil tauscht, und danach den die Handgriffpolster bildenden Kunststoff über einen zweiten gesonderten Zuführungskanal in die Form einspritzt.

Auf diese Weise gelingt es, den Transportkasten mit gepolsterten Handgrtfftöchern in ein und derselben Form ohne Umsetzung des Spritzlings in drei Arbeitsstufen zu fertigen, einer ersten, in der unter hohem Druck ein harter Kunststoff in die Form eingepreßt wird, einer zweiten, in der ein Teil der Wandung der Form ausgetauscht wird, und einer dritten, in der unter vermindertem Druck die zweite den Handgriff bildende Kunststoffkomponente in die Form auf einem zweiten Weg eingepreßt wird.

Diese Arbeitsweise erfordert nur eine einzige Form und eine einzige Spritzgußmaschine und daher auch keine Umsetzarbeit. Daher ist die Arbeitszeit verkürzt und die beiden Kunststoffe werden in der Reihenfolge ausgeformt, die für sie angemessen ist, zuerst der harte Kunststoff für den eigentlichen Kasten, dann der weiche Kunststoff für den Handgriff. So läßt sich die Produktion vereinfachen, effektiver machen und verbilligen.

Ausgeführt wird diese Verfahren mit einer Spritzgußform, die sich dadurch auszeichnet, daß die Spritzgußform in ihrer die Seitenwand mit dem gepolsterten Handgiffloch formenden Außenwand zwei gegeneinander austauschbar verschiebbare Formteile enthält, ein Formteil, das beim Spritzen des Kastens die Form für den Wandteil zur Aufnahme des Handgiffpolsters bildet und einen zweiten Formteil für die Formung des Handgriffpolsters, und daß diese Spritzgußform zwei unterschiedliche Kanäle bzw. Kanalsysteme für die Zuführung der beiden unterschiedlichen Kunststoffe aufweist, einen für den harten, den Kasten bildenden Kunststoff im Boden des zu formenden Kastens und einen weiteren für den das Handgriffpolster bildenden Kunststoff im oder am oberen Kastenrand.

Für das Vorgehen nach diesem Verfahren gibt es zwei Möglichkeiten:

Bei der einen Möglichkeit werden die beiden austauschbaren Formteile als gesonderte Teile einzeln nacheinander von zwei unterschiedlichen Warteplätzen in ihre Arbeitsstellung geschoben und dort verriegelt.

Die andere Möglichkeit besteht darin, daß man die beiden austauschbaren Formteile auf einer gemeinsamen Formleiste anordnet und diese in zwei Stellungen verschiebt und in jeder dieser Stellungen verriegelt.

Vorteilhaft ist es bei diesen Verfahren, daß man für den ersten Spritzvorgang mit dem harten Kunststoff einen am Kastenboden angeordneten Einspritzkanal benutzt und daß man für den zweiten Spritzvorgang einen zweiten im Bereich des oberen Kastenrandes angeordneten Einspritzkanal benutzt.

Dabei ist es zweckmäßig, daß die Spritzgußform einen sich durch den oberen Rand des Kastens erstreckenden Stift aufweist, der ein durch den oberen Rand sich bis zum Handgriffloch erstrechenden während des ersten Spritzgußvorganges entstehenden Kanal formt, durch den dann im zweiten Spritzvorgang der weiche, das Handgriffpolster bildende Kunststoff eingespritzt wird.

Das Wesen der Erfindung ist nachstehend anhand eines in der Zeichnung schematisch dargestellten Ausführungsbeispieles näher erläutert. Es zeigen:
- Fig.1: einen Transportkasten mit Handgriffpolsterung und durch Pfeile dargestellte Fließwege der zwei Kunststoff massen.
- Fig.2: einen Teil der Spritzgußform am Ort des Handgriffloches mit der Formteilwechselmechanik.

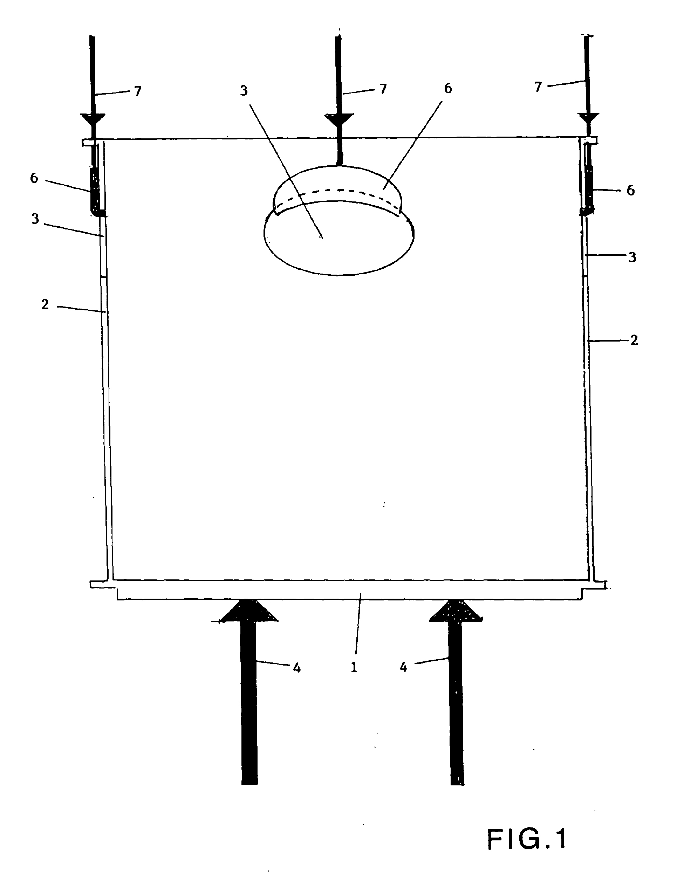

Der in Fig.1 dargestellte Transportkasten besteht aus einem Boden 1 und vier Seitenwänden 2. Diese weisen Handgrifflöcher 3 auf, die dem Träger des Kastens das Tragen erleichtern. Dieser Transportkasten wird als ein Stück im Spritzgußverfahren hergestellt, indem die durch Wärme und Extrusion fließfähig gemachte Kunststoffmasse über die Fließwege 4 in den Boden 1 eingespritzt wird, von wo sie sich über den ganzen Boden 1 und alle Seitenwände 2 bis zum oberen Kastenrand 5 unter dem anstehenden Druck in der Kunststoffmasse verteilt. In den Handgrifflöchern 3 sind Polster 6 in einem zweiten Spritzgußvorgang, der in derselben Form durchgeführt wird, angebracht. Die Polster 6 erstrecken sich durch das Handgriffloch 3 selbst in horizontaler Richtung und bedecken in vertikaler Richtung einen Teil der Oberfläche der Seitenwand 2 oberhalb des Handgrifftoches 3. Diese Polster 6 sind aus einem weicheren Kunststoff ebenfalls im Spritzgußverfahren in derselben Form gefertigt, und zwar wird dieser Kunststoff über gesonderte Fließwege 7 in die Form an dem oberen Kastenrand eingespritzt, Fließwege 7, die bei dem ersten Spritzvorgang durch verschiebbare und dann für den zweiten Spritzvorgang zurückgezogene nicht dargestellte Stifte gebildet wurden.

Der erste Spritzgußvorgang, bei dem verflüssigter Kunststoff durch die Fließwege 4 in den Boden des Kastens unter hohem Druck eingespritzt wird, dient der Fertigung des eigentlichen Kastens ohne Polster 6 in den Handgrifflöchern 3. Nach Ausführung dieses ersten Spritzvorganges erfolgt in der Form eine Umrüstung, und zwar wird der Formteil 8, der das Handgriffloch 3 geformt hat, gegen ein anderes Formteil 9, das das Polster 6 bildet und den unteren Teil des Handgriffloches 3 unter dem Polster 6 verschlossen hält, ausgetauscht.

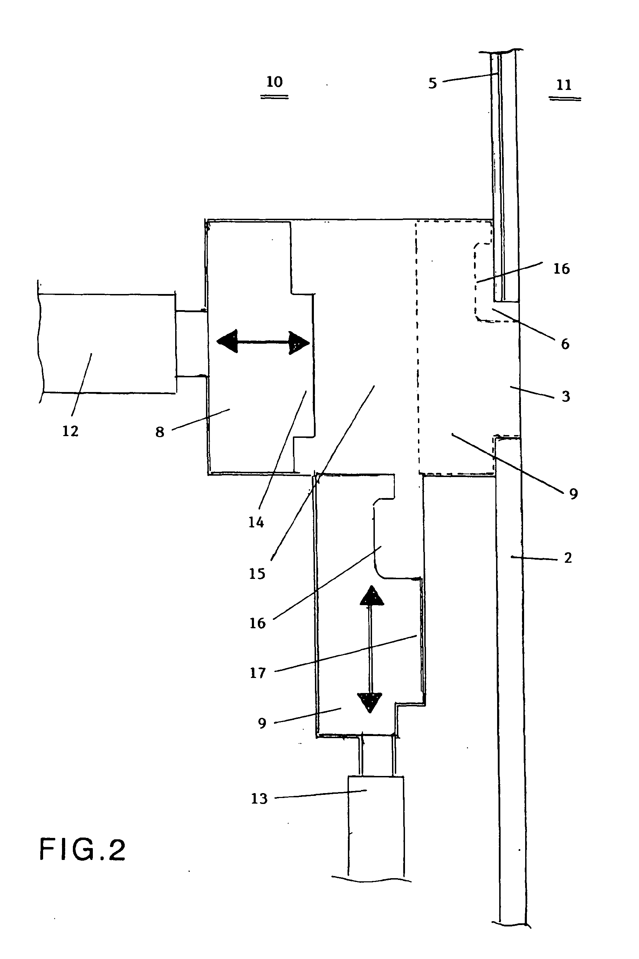

Wie das vonstatten geht, ist anhand der Fig.2 erläutert: Die Seitenwand 2 des zu fertigenden Transportkasten ist auf der linken Seite von der nicht dargestellten Außenwand 10 der Form,auf der rechten Seite von dem nicht dargestellten Formenkern 11 eingefaßt. In der Außenwand 10 der Form sind die beiden auszutauschenden Formteile 8,9 verschiebbar durch die Kraft zweier Hydraulik-Zylinder-Kolben-Einheiten 12,13 untergebracht. Und zwar wird das das Handgriffloch 3 formende Formteil 8, das einen die Außenkonturen des Handgriffloches 3 tragenden Vorsprung 14 trägt, vor dem ersten, den eigentlichen Kasten formenden Spritzgußvorgang mittels der Hydraulik-Zylinder-Kolben-Einheit 12 hin zur Kastenseitenwand und nach dem ersten Spritzgußvorgang zurück in die in der Zeichnung dargestellte Ruhestellung verschoben. Das das Polster 3 mittels seines Hohlraumes 16 formende Formteil 9, das ebenfalls einen in das Handgriffloch 3 passenden Vorsprung 17 trägt, wird durch die in der Zeichnung in ihrer Ruhestellung dargestellte Hydraulik-Zylinder-Kolben-Einheit 13 zunächst nach oben in den Freiraum 15 verschoben, bis es vor dem Formteil 8 steht, sodann wird das Formteil 9 von der Hydraulik-Zylinder-Kolben-Einheit 13 entkoppelt und an das Formteil 8 angekoppelt, wonach die Hydraulik-Zylinder-Kolben-Einheit 12 die gekoppelten Formteile 8,9 soweit in Richtung der Kastenseitenwand 2 verschiebt, bis der Vorsprung 17 in dem Handgriffloch 3 steht,so wie es durch die gestrlchelte Linie in Fig 2 dargestellt ist, wonach der zweite, das Polster 6 formende Spritzgußvorgang vorgenommen wird. Auf umgekehrtemWeg mit umgekehrten Arbeitsschritten wird das Formteil 9 anschließend in seine in der Zeichnung dargestellte Ruhestellung zurück gefahren.

### Liste der Bezugszeichen

- 1: Boden des Transportkasten
- 2: Seitenwand
- 3: Handgriffloch
- 4: Fließweg
- 5: oberer Kastenrand
- 6: Polster
- 7: Fließwege
- 8: Formteil zur Formung des Handgriffloches
- 9: Formteil zur Formung des Polsters
- 10: Formkern
- 11: Außenwand der Form
- 12: Hydraulik-Zylinder-Kolben-Einheit
- 13: Hydraulik-Zylinder-Kolben-Einheit
- 14: Vorsprung am Formteil 7
- 15: Hohlraum
- 16: Freiraum
- 17: Vorsprung am Formteil 8

## Patentansprüche

1. Verfahren zur Herstellung eines Transportkastens aus Kunststoff mit gepolstertem Handgriff,
bei dem derTransportkasten aus einem harten stabilen Kunststoff und der Handgriff aus einem weichen Kunststoff hergestellt ist,
**dadurch gekennzeichnet,**
**daß** man eine Spritzgußform verwendet, die in ihrer die Seitenwand mit dem gepolsterten Handgiffloch formenden Außenwand zwei gegeneinander austauschbar verschiebbare Formteile enthält, ein Formteil, das beim Spritzen des Kastens die Form für das Handgriffloch und für den Wandteil zur Aufnahme des Handgiffpolsters bildet
und einen zweiten Formteil, der das Handgriffpolster formt,
**daß** man in diese Spritzgußform zuerst den harten, den Kasten bildenden Kunststoff einspritzt, diesen bis zu seiner Standfestigkeit (Formstabilität) erkalten läßt,
dann den das Handgriffloch bildenden Formteil gegen den das Polster im Handgriffloch bildenden Formteil tauscht,
und danach den das Polster bildenden Kunststoff über einen zweiten gesonderten Zuführungskanal in die Form einspritzt.

2. Verfahren nach Anspruch 1,
**dadurch gekennzeichnet,**
**daß** die beiden austauschbaren Formteile als gesonderte Teile einzeln nacheinander von zwei unterschiedlichen Warteplätzen in ihre Arbeitsstellung geschoben und dort verriegelt werden.

3. Verfahren nach Anspruch 1,
**dadurch gekennzeichnet,**
**daß** man die beiden austauschbaren Formteile auf einer gemeinsamen Formleiste anordnet und diese in zwei Stellungen verschiebt und in jeder dieser Stellungen verriegelt.

4. Verfahren nach Anspruch 1,
**dadurch gekennzeichnet,**
**daß** man für den ersten Spritzvorgang mit dem harten Kunststoff einen am Kastenboden angeordneten Einspritzkanal benutzt
und **daß** man für den zweiten Spritzvorgang einen zweiten im Bereich des oberen Kastenrandes angeordneten Einspritzkanal benutzt.

5. Spritzgußform zur Herstellung eines Transportkastens aus Kunststoff mit gepolstertem Handgriff,
bei dem derTransportkasten aus einem harten stabilen Kunststoff und der Handgriff aus einem weichen Kunststoff hergestellt ist,
**dadurch gekennzeichnet,**
**daß** die Spritzgußform in ihrer die Seitenwand mit dem gepolsterten Handgiffloch formenden Außenwand zwei gegeneinander austauschbar verschiebbare Formteile enthält, ein Formteil, das beim Spritzen des Kastens die Form für den Wandteil zur Aufnahme des Handgiffpolsters bildet und einen zweiten Formteil für die Formung des Handgriffpolsters,
und **daß** diese Spritzgußform zwei unterschiedliche Kanäle für die Zuführung der beiden unterschiedlichen Kunststoffe aufweist,
einen für den harten, den Kasten bildenden Kunststoff im Boden des zu formenden Kastens und einen weiteren für den das Handgriffpolster bildenden Kunststoff.

6. Spritzgußform nach Anspruch 5,
**dadurch gekennzeichnet,**
**daß** der weitere Kanal für die Zuführung des das Handgriffpolster bildenden Kunststoff im Bereich des oberen Kastenrandes angeordnet ist.

7. Spritzgußform nach Anspruch 6,
**dadurch gekennzeichnet,**
**daß** die Spritzgußform einen sich durch den oberen Rand des Kastens erstreckenden Stift aufweist, der ein durch den oberen Rand sich bis zum Handgriffloch erstrechenden während des ersten Spritzgußvorganges entstehenden Kanal formt.

8. Spritzgußform nach Anspruch 5,
**dadurch gekennzeichnet,**
**daß** die beiden austauschbaren Formteile gesonderte Warteplätze haben, von denen sie mit Schiebern in ihre Arbeitsstellung geschoben und dort mit Schiebern verriegelt werden.

9. Spritzgußform nach Anspruch 5,
**dadurch gekennzeichnet,**
**daß** die beiden austauschbaren Formteile auf einer gemeinsamen Leiste anordnet sind und daß diese in zwei Stellungen verschiebbar und in jeder dieser Stellungen verriegelbar ist.
